Europäisches Patentamt

European Patent Office

Office européen des brevets

(11) Veröffentlichungsnummer: **0 362 426**
**A1**

(12) # EUROPÄISCHE PATENTANMELDUNG

(21) Anmeldenummer: **88116486.7**

(22) Anmeldetag: **05.10.88**

(51) Int. Cl.⁵: **G01P 13/02**

(43) Veröffentlichungstag der Anmeldung:
**11.04.90 Patentblatt 90/15**

(84) Benannte Vertragsstaaten:
**AT BE CH DE ES FR GB IT LI NL SE**

(71) Anmelder: **Notar, Walter**
**Valerystrasse 43**
**D-8044 Unterschleissheim(DE)**

(72) Erfinder: **Notar, Walter**
**Valerystrasse 43**
**A-8044 Unterschleissheim(AT)**
Erfinder: **Knorr, Helmut**
**Reiherweg 2**
**D-8000 München 82(DE)**

(54) **Strömungsmessvorrichtung.**

(57) Bei einer Meßvorrichtung zur gleichzeitigen Richtungs- und Geschwindigkeitsmessung von gasförmigen und flüssigen Medien mit einem stationären Halteteil (1), einem an diesem drehbar gelagerten Rahmen (3) und mit einer Geschwindigkeitsmeßeinrichtung (8), die die Strömungsgeschwindigkeit des Mediums auf einer gedachten Verlängerung der Drehachse (2) der Strömungsrichtungsmeßeinrichtung (6) erfaßt, ist die Drehachse (2) der Strömungsrichtungsmeßeinrichtung (6) mittig drehfest mit dem Halteteil (1) verbunden, während sich die Lagerstellen (4, 5) im Rahmen (3) befinden und die Signalgeber (6, 8) jeweils an einem Ende der Achse (2) gegenüberliegend angeordnet sind.

FIG 1

EP 0 362 426 A1

## Strömungsmeßvorrichtung zur Richtungs-und Geschwindigkeitsmessung von Fluiden

Die Erfindung betrifft eine Meßvorrichtung zur gleichzeitigen Richtungs- und Geschwindigkeitsmessung von gasförmigen und flüssigen Medien mit einem stationären Halteteil, einem an diesem drehbar gelagerten Rahmen und mit einer Geschwindigkeitsmeßeinrichtung, die die Strömungsgeschwindigkeit des Mediums auf einer gedachten Verlängerung der Drehachse der Strömungsrichtungsmeßeinrichtung erfaßt.

In der älteren nicht vorveröffentlichten Anmeldung DE 3710558 ist eine trägheitsarme Meßvorrichtung zur Richtungs- und Geschwindigkeitsbestimmung von Fluiden, insbesondere zur Driftmessung an Schiffen, beschrieben, bei der an einer, in einem offenen Rahmen drehbar gelagerten Fahne, die zur Richtungsbestimmung dient, eine Geschwindigkeitsmeßeinrichtung fluchtend mit der Drehachse der Fahne angeordnet ist, so daß eine berührungslose Signalabtastung stationär vom Rahmen aus auch bei ausgelenkter Fahne erfolgen kann.

Als Geschwindigkeitsmeßeinrichtung dient ein steingelagerter Impeller mit ferromagnetischen Flügeln, dessen Drehzahl mit Hilfe eines Hallsensors abgetastet wird. An der Achse der Richtungsmeßfahne, die ebenfalls steingelagert ist, ist ein Permanentmagnet korrosionsgeschützt befestigt, der auch von mindestens einer Hallsonde abgetastet wird. Durch den kurzen Abstand der Lagerstellen bedingt wirken auf die Lager hohe Kippmomente. Das bedeutet hohe Reibungskräfte und dadurch Meßgenauigkeitseinbußen. Der stationäre Halteteil mit seinem großen Verdrängungsvolumen ist sehr nahe an der Geschwindigkeitsmeßeinrichtung angeordnet. Das Meßsignal wird daher, bedingt durch Interferenzerscheinungen, ungünstig beeinflußt und verfälscht.

Es ist Aufgabe der Erfindung, diese Nachteile zu vermeiden und eine Meßvorrichtung zur gleichzeitigen Richtungs- und Geschwindigkeitsmessung von gasförmigen und flüssigen Medien zu schaffen, bei der keine großen Kippmomente in den Lagern wirken und bei der sich kaum noch Interferenzen zwischen Halteteil und Geschwindigkeitsmeßeinrichtung auftreten.

Gelöst wird diese Aufgabe in einem Fall dadurch, daß die Drehachse der Strömungsrichtungsmeßein richtung mittig drehfest mit dem Halteteil verbunden ist, während sich die Lagerstellen im Rahmen befinden und die Signalgeber jeweils an einem Ende der Achse gegenüberliegend angeordnet sind. Bei dieser Lösung treten in den Lagern nur Querkräfte, aber keine Kippmomente mehr auf. Dadurch läßt sich mit wesentlich höherer Genauigkeit messen und die Lager können kleiner dimensioniert werden, was die Genauigkeit nochmals erhöht. Weiterhin läßt sich bei der erfindungsgemäßen Vorrichtung der stationäre Halteteil klein und strömungsgünstig ausformen, während der Abstand zur Geschwindigkeitsmeßvorrichtung so groß ist, daß praktisch keine Interferenz auftritt. Ein weiterer Vorteil der Erfindung ist, daß der Rahmen den Impeller nur halb umschließen muß. Dadurch ergibt sich eine größere Anströmfläche und eine geringere Reaktionszeit bei dynamischen Messungen.

Im anderen Fall wird die Aufgabe dadurch gelöst, daß der Rahmen drehbar um einen im Halteteil stationär verankerten Hohlzapfen gelagert ist, und die Meßsignale der Geschwindigkeitsmeßeinrichtung durch den Hohlzapfen geleitet werden.

Bei dieser bevorzugten Lösung ergibt sich noch zusätzlich der Vorteil, daß die Meßvorrichtung den gesamten Winkelbereich von 360° abdeckt. Bei dieser Version können jedoch keine Steinlager verwendet werden, da die Stirnseiten des Hohlzapfens für die Durchleitung der Meßsignale frei bleiben müssen. Hier können handelsübliche Kugel- oder Gleitlager zum Einsatz kommen. um die erfindungsgemäße Vorrichtung trotzdem in aggressiven Flüssigkeiten, wie zum Beispiel in Salzwasser zum Einsatz bringen zu können, wird das Halteteil so ausgebildet, daß es den Teil des Rahmens, in dem die Lager für den Hohlzapfen angeordnet sind, buchsenartig umschließt, und die Buchse an dem dem Halteteil abgewandten Ende eine volumenmäßige Erweiterung aufweist.

Auf diese Weise bleiben die Lager immer von LUft umschlossen. Die Erweiterungen müssen so dimensioniert sein, daß das Volumen der durch eindringendes Druckwasser komprimierten Luft noch ausreicht den Raum um die Lagerstellen zu füllen.

In einer weiteren vorteilhaften Ausgestaltung der Erfindung werden beide Meßeinrichtungen um den Mittelpunkt des Impellers kardanisch gelagert. Auf diese Weise läßt sich eine Strömung in ihrer tatsächlichen Raumrichtung messen.

In besonders vorteilhafter Weise wird die Strömungsrichtung mithilfe eines Permanentmagneten und eines Hallsensors abgetastet, während die Strömungsgeschwindigkeit opt-elektronisch bestimmt wird.

Die Erfindung wird anhand der Zeichnung näher beschrieben.

Es zeigt:

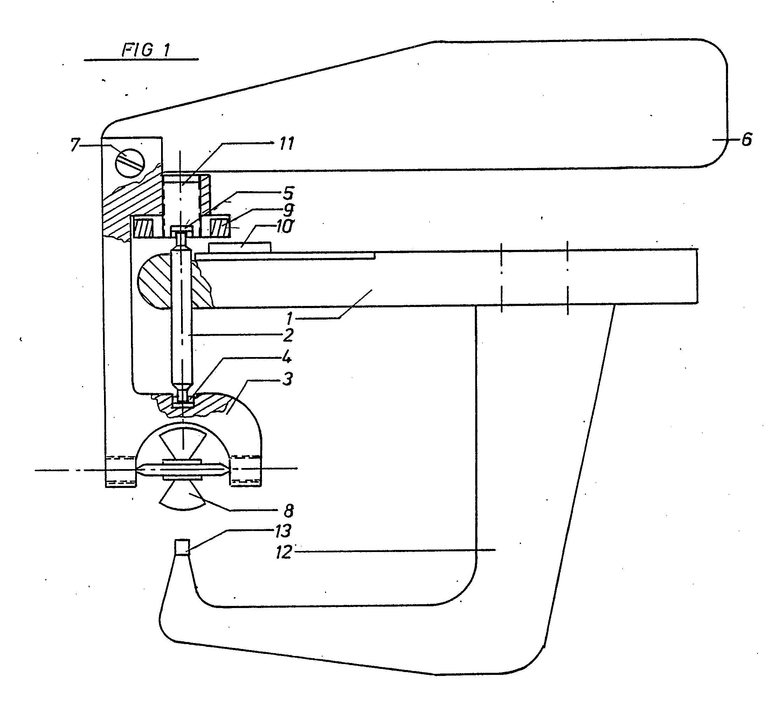

Figur 1 Eine Ansicht einer ersten Lösungsform des erfindungsgemäßen Gegenstandes

Figur 2 Eine Ansicht einer zweiten Lösungsform mit einem Meßbereich von 360° und meerwassergeschützten Lagerstellen.

Figur 3 a,b Den erfindungsgemäßen Gegenstand mit kardanischer Aufhängung.

In einem stationären Halteteil l ist drehfest die Achse 2 verankert.Ein Rahmen 3 ist über Steinlager 4 und 5 drehbar an der Achse befestigt. Die Richtungsfahne 6 ist über die Schraube 7 fest mit dem Rahmen verbunden. Fluchtend mit der Achse 2 ist der Impeller 8 im Rahmen 3 gelagert. Die Abtastung der Strömungsrichtung erfolgt mittels Permanentmagnet 9 und Hallsensor 10. Das Steinlager 5 ist in einem Gewindebolzen 11 befestigt und kann dadurch justiert werden. Der Permanentmagnet 9 kann gleichzeitig auf den Gewindebolzen aufgeschraubt werden. Dadurch ist die Möglichkeit der Justierung des Abstandes zum Hallsensor 10 gegeben. Die Abtastung der Drehzahl des Impellers 8 erfolgt im angegebenen Beispiel opto-elektronisch. An einem Ausleger 12 des Halteteils 1 ist eine optische Sende-Empfangseinheit 13 befestigt, die die Drehzahl des Impellers in der Verlängerung der Achse 2 erfaßt.
Der Mittelpunkt des Impellers 8 bleibt bei jeder Stellung der Richtungsfahne 6 stationär gegenüber der Sende-Empfangseinheit 13.

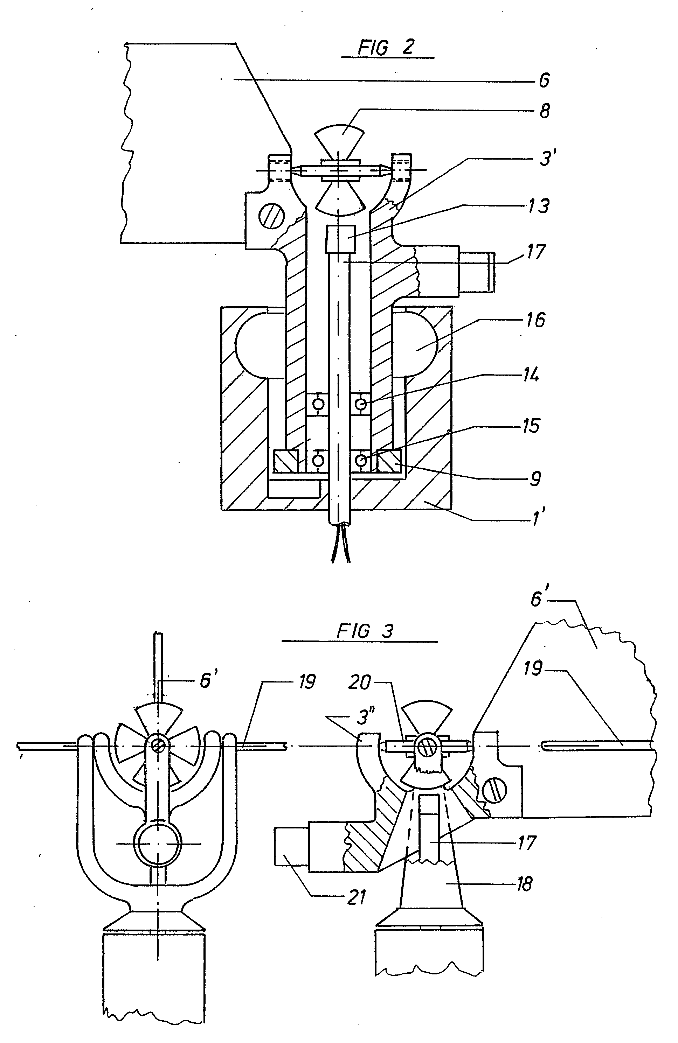

In Figur 2 umschließt das Halteteil 1' den Rahmen 3' buchsenartig an der Stelle, an der sich die Lager 14 und 15 befinden. Die buchsenartige Umschließung als Element des Halteteils 1' weist eine Erweiterung 16 zur Speicherung von Luftvolumen auf. Der Rahmen 3' ist an einem Hohlzapfen 17 gelagert, der fest im Halteteil 1' verankert ist. Eine opto-elektronische Abtasteinrichtung 13 befindet sich an dem Ende des Hohlzapfens 17, das dem Impeller 8 zugewandt ist. Die empfangenen Signale werden durch die Mitte des Hohlzapfens 17 abgeleitet. Der Rahmen 3' umschließt den Impeller 8 nur zur Hälfte. Die Richtungsfahne 6 ist so am Rahmen 3' angebracht, daß die Strömungsrichtungsmeßeinrichtung und die Geschwindigkeitsmeßeinrichtung praktisch ein Teil bilden, das sich um 360° verschwenken läßt.

In Figur 3 ist der Rahmen 3'' nicht direkt auf dem Hohlzapfen 17 gelagert, sondern auf einem Zwischenstück 18, welches wiederum wie der Rahmen 3' in Figur 2 auf dem Hohlzapfen befestigt ist. Das Zwischenstück 18 und der Rahmen 3'' ergeben zusammen eine kardanische Lagerung der Richtungsfahne 6'. Um die Fahne 6' nach allen Raumrichtungen ausrichten zu können, ist ein Querflügel 19 an der Fahne 6' angebracht. Um die Meßeinrichtung in Balance zu halten ist am Rahmen 3'' ein Ausgleichsgewicht 21 angebracht.

## Ansprüche

1. Meßvorrichtung zur gleichzeitigen Richtungs- und Geschwindigkeitsmessung von gasförmigen und flüssigen Medien mit einem stationären Halteteil, einem an diesem drehbar gelagerten Rahmen und mit einer Geschwindigkeitsmeßeinrichtung, die die Strömungsgeschwindigkeit des Mediums auf einer gedachten Verlängerung der Drehachse der Strömungsmeßeinrichtung erfaßt, dadurch gekennzeichnet, daß die Drehachse der Strömungsmeßeinrichtung mittig drehfest mit dem Halteteil verbunden ist, während sich die Lagerstellen im Rahmen befinden und die Signalgeber jeweils an einem Ende der Achse gegenüberliegend angeordnet sind.

2. Meßvorrichtung nach Anspruch l, dadurch gekennzeichnet, daß die Strömungsmeßeinrichtung eine Fahne aufweist, deren Drehwinkel digital oder analog abgetastet wird.

3. Meßvorrichtung nach Anspruch 1 bis 2, dadurch gekennzeichnet, daß der Drehwinkel der Fahne mittels Permanentmagnet und Hallsensor abgetastet wird.

4. Meßvorrichtung, nach Anspruch 1 bis 2, dadurch gekennzeichnet, daß die Geschwindigkeitsmeßeinrichtung digital oder analog abgetastet wird.

5. Meßvorrichtung, nach Anspruch 4, dadurch gekennzeichnet, daß die Geschwindigkeitsmeßeinrichtung einen Impeller aufweist, dessen Drehgeschwindigkeit opto-elektronisch, induktiv oder kapazitiv abgetastet wird.

6. Meßvorrichtung nach dem Oberbegriff von Anspruch 1, dadurch gekennzeichnet, daß der Rahmen drehbar um einen im Halteteil stationär verankerten Hohlzapfen gelagert ist, und die Meßsignale der Geschwindigkeitsmeßeinrichtung durch den Hohlzapfen geleitet werden.

7. Meßvorrichtung nach Anspruch 6, dadurch gekennzeichnet, daß die Geschwindigkeitsmeßeinrichtung als Teil der Strömungsmeßeinrichtung ausgebildet ist.

8. Meßvorrichtung nach Anspruch 6, dadurch gekennzeichnet, daß das Halteteil den Teil des Rahmens, in dem die Lager für den Hohlzapfen angeordnet sind, buchsenartig umschließt, und daß die Buchse an dem dem Halteteil abgewandten Ende eine volumenmäßige Erweiterung aufweist.

9. Meßvorrichtung nach Anspruch 7, dadurch gekennzeichnet, daß zusätzlich zu dem Hohlzapfen eine weitere Drehachse vorgesehen ist, die eine kardanische Lagerung der Meßeinrichtungen ermöglicht.

10. Meßvorrichtung nach Anspruch 3 und einem der Ansprüche 6 bis 8, dadurch gekennzeichnet, daß die Strömungsmeßeinrichtung und die Geschwindigkeitsmeßeinrichtung durch nur einen Hallsensor abgetastet werden.

FIG 1

## FIG 2

6

8

3'

13

17

16

14

15

9

1'

## FIG 3

6'

6'

19

20

19

3"

17

21

18

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| X | US-A-2 592 583 (W.K. LYON) * Spalte 3, Zeile 46 - Spalte 4, Zeile 25; Figuren 1-3 * --- | 1,2,4,5 ,7,9 | G 01 P 13/02 |
| X | DE-C- 383 373 (M. SCHULZE) * Seite 1, Zeilen 20-29; Figuren 1-3 * --- | 6 | |
| A | FR-A-2 177 262 (FAGLIA et al.) * Insgesamt; Figuren 1-3 * --- | 1,2,4,5 | |
| A | AT-B- 298 115 (VDO) * Seite 1, Zeilen 25-34; Figuren 1-3 * --- | 2,3 | |
| A | GB-A-1 404 133 (ABBIRKO INSTRUMENTS) * Seite 1, Zeilen 70-80; Figuren 1-3 * --- | 5 | |
| A | GB-A-1 421 928 (VOGELBUSCH GmbH) * Seite 2, Zeilen 24-62; Figur 2 * ----- | 6,9 | |

**RECHERCHIERTE SACHGEBIETE (Int. Cl.3)**

G 01 P

Der vorliegende Recherchenbericht wurde für alle Patentansprüche erstellt

| Recherchenort | Abschlußdatum der Recherche | Prüfer |
|---|---|---|
| DEN HAAG | 02-06-1989 | HANSEN P. |